# FASCICULE DE BREVET EUROPEEN

(11) **EP 2 920 066 B1**
(45) Date de publication et mention de la délivrance du brevet: **26.10.2016**
(21) Numéro de dépôt: 13801471.7
(22) Date de dépôt: 14.11.2013
(51) Int. Cl.: E05F 15/70, E05F 15/60, E05F 15/40, E05F 11/54, B64C 1/14

(54) **PROCEDE D'OUVERTURE/FERMETURE D'UNE PORTE ELECTRIQUE D'AERONEF POUR CELLULE PRESSURISEE ET PORTE POUR LA MISE EN OEUVRE DUDIT PROCEDE**
VERFAHREN ZUM ÖFFNEN/SCHLIESSEN EINER ELEKTRISCHEN FLUGZEUGTÜR FÜR EIN UNTER DRUCK STEHENDE FLUGZEUGZELLE UND TÜR ZUR DURCHFÜHRUNG DES VERFAHRENS
METHOD FOR OPENING/CLOSING AN AIRCRAFT ELECTRIC DOOR FOR A PRESSURIZED AIRFRAME AND DOOR FOR IMPLEMENTING SAID METHOD

(30) Priorité: 16.11.2012 FR 1260893
(43) Date de publication de la demande: 23.09.2015
(73) Titulaire: Latecoere, 31500 Toulouse (FR)
(72) Inventeur: BESSETTES, Cyrille, F-31660 Buzet sur Tarn (FR); BUCHET, Damien, F-31500 Toulouse (FR); LUTZI, Nicolas, F-31000 Toulouse (FR); OTHOMENE, Renaud, F-31500 Toulouse (FR)
(74) Mandataire: Junca, Eric
(86) Numéro de dépôt international: PCT/EP2013/003429
(87) Numéro de publication internationale: WO 2014/075798

(56) Documents cités:
- FR-A1- 2 758 520
- GB-A- 1 452 334
- US-A- 4 473 201
- US-A- 5 251 851

## Description

### DOMAINE TECHNIQUE

L'invention se rapporte à un procédé d'ouverture/fermeture d'une porte électrique d'aéronef pour cellule pressurisée, ainsi qu'à une porte électrique destinée à mettre en oeuvre ce procédé. Cette porte peut être une porte passagers, une porte de service, une porte cargo, en utilisation nominale ou d'urgence, ou encore une porte de sortie d'urgence.

De manière générale, l'ouverture d'une porte d'aéronef peut se décomposer en plusieurs phases qui se succèdent : déverrouillage et libération du cran de sûreté, levage, pivotement et dégagement de la porte le long de la face externe du fuselage de l'avion. En particulier, l'amorçage de la phase de levage peut permettre de briser la glace éventuellement présente sur la face externe du fuselage, avant de poursuivre l'ouverture de la porte par les phases de pivotement et de dégagement. Pour la fermeture, les phases se déroulent dans l'ordre inverse et selon une cinématique inverse.

Dans des situations d'urgence, il convient de pouvoir déclencher l'ouverture de la porte en une seule opération. Du fait des contraintes d'opérabilité du personnel des compagnies aériennes, l'effort sur la poignée d'actionnement de la porte pour son ouverture ou sa fermeture doit être limité dans les conditions normales d'utilisation et dans les conditions d'urgence.

En particulier, un faible dégivrage de la porte (par exemple de l'ordre de 2,5 mm d'épaisseur de glace sur le fuselage) génère déjà des difficultés d'ouverture, ce qui ne permet pas de réaliser une évacuation d'urgence des passagers dans les conditions de sécurité requises. en cas d'évacuation. Un fort dégivrage de la porte (par exemple de plus de 6 mm d'épaisseur de glace) rend difficile l'ouverture de la porte, ce qui nécessite l'intervention de plusieurs opérateurs et génère un retard de débarquement des passagers.

Les portes sont donc avantageusement équipées de moteurs électriques qui viennent garantir leur ouverture par un apport de puissance approprié. Ces moteurs commandent des actionneurs qui guident la porte selon une cinématique préétablie, avec une phase de levage pour casser la glace à l'extérieur du fuselage

### ÉTAT DE LA TECHNIQUE

Il est connu du document de brevet EP 0 465 785 une porte électrique d'avion dont la cinématique d'ouverture et de fermeture est mise en oeuvre par une douzaine de moteurs électriques. Ces moteurs sont numériquement commandés pour exécuter différentes phases fonctionnelles de manière coordonnée: pivotement, fermeture et verrouillage ainsi que les fonctions inverses.

Par ailleurs, le document de brevet US 5163639 décrit une porte électrique de passagers d'un avion équipée de deux moteurs électriques de commande des opérations : un moteur de commande de la rotation de la porte et un moteur de commande des moyens d'ouverture/fermeture de la porte.

La porte électrique du document de brevet EP 1 090 834 est également équipée de deux moteurs électriques actionnés par une unité de contrôle et de gestion. Cette unité transmet des signaux de commande à un premier moteur pour verrouiller/déverrouiller et soulever un arbre de levage et de (dé)verrouillage de la porte, et un deuxième moteur pour pivoter la porte et l'amener dans sa positon finale d'ouverture.

En outre, on connaît le document FR 2 758 520 A1, qui est considéré comme l'art antérieur le plus proche.

Dans des situations critiques de sortie d'urgence - risque d'incendie, atterrissage non sécurisé, problème technique grave - la porte doit pouvoir se dégager automatiquement du fuselage après avoir activé la poignée. Cette activation se fait en général par un vérin pneumatique en liaison avec une réserve de gaz.

Ces solutions présentent des inconvénients majeurs au regard de la sécurité, en particulier en cas d'ouverture d'urgence, et plus généralement, de l'enchaînement de la cinématique. Ces difficultés se rapportent à la complexité de coordination entre les moteurs pour réaliser les différentes phases d'ouverture/fermeture de la porte, ainsi qu'à la présence d'un vérin pneumatique avec sa réserve de gaz pour une activation en cas d'urgence. De plus, le bris de la glace externe ne fait pas l'objet d'aucun traitement particulier dans les solutions motorisées.

### EXPOSÉ DE L'INVENTION

L'invention vise à remédier à ces inconvénients de l'état de la technique en intégrant l'activation des principales phases de libération et de combinaison de mouvements de la porte à l'aide d'une motorisation électrique unique, y compris le traitement de la glace externe éventuellement présente.

Plus précisément, la présente invention a pour objet un procédé d'ouverture/fermeture d'une porte électrique d'aéronef pour cellule pressurisée, porte passagers ou de service, sous l'entraînement d'une motorisation électrique unique commandée par un calculateur de porte :
- en ouverture de porte, après désarmement du toboggan, à enchaîner successivement des phases séquentielles de déverrouillage, de levage et de pivotement de la porte par
   - déverrouillage du cran de sûreté de la porte par libération de moyens de verrouillage d'un système de verrouillage ;
   - levage électrique de la porte par un bras de porte articulé sur une charnière verticale montée sur la porte, et entraîné par le moteur électrique en guidage mécaniquement forcé selon l'axe vertical par blocage d'un entraînement en rotation horizontal selon le même axe ;
   - libération d'un guidage horizontal lorsque le guidage vertical arrive en butée, puis entraînement en pivotement du bras de porte selon un guidage horizontal le long d'une surface cylindrique d'axe de rotation vertical pour dégager la porte le long du fuselage externe de l'avion ;
- en fermeture de porte, à entraîner le bras de porte et la porte en rotation de sens inverse que celui de l'ouverture par guidage horizontal le long de la surface cylindrique, à arrêter le guidage horizontal de pivotement du bras de porte lorsque ce guidage arrive en butée, puis à baisser le bras de porte et la porte 1 par un guidage mécaniquement forcé selon l'axe vertical par blocage de l'entraînement en rotation.

L'ouverture de la porte se fait aussi bien depuis l'extérieur que depuis l'intérieur de l'aéronef, après désarmement du toboggan et déverrouillage du cran de sûreté, par levage de la porte par le bras de porte, puis par entraînement du bras de porte en rotation.

Selon des modes de mise en oeuvre préférés :
- le levage est initiée par une phase accélérée à l'aide d'un levier démultiplicateur de quelques millimètres à une dizaine de millimètres qui produit un effort suffisamment élevé pour briser la glace éventuellement formée sur l'avion, entre le périmètre de la porte et le fuselage ;
- le calculateur de porte gère les mouvements de la porte en fonction des informations transmises par l'ensemble des capteurs de position agencés en regard des pièces en rotation équipées de pistes de roulements à effet Hall ;
- en cas d'urgence, le déverrouillage du cran de sûreté de la porte est déclenché en une seule opération par actionnement d'une poignée interne qui, par détection de son déplacement, transmet un signal de déverrouillage au calculateur de porte.

L'invention se rapporte également à une porte électrique d'aéronef pour cellule pressurisée, à savoir porte passagers ou de service, comportant un système de verrouillage muni de moyens de verrouillage d'un cran de sûreté, et un système de coordination de mouvements de porte comportant un moteur électrique unique d'entraînement d'un support cylindrique mobile d'axe de rotation vertical, géré par un calculateur de porte, et un guide fixe, le support mobile et le guide fixe étant destinés à piloter et coordonner le déplacement du bras de porte. Le support présente au moins un chemin de guidage en liaison avec le bras, ce chemin de guidage étant au moins partiellement hélicoïdal selon l'axe vertical du support. Le bras de porte est apte à pivoter autour d'une charnière verticale et est lié à des moyens de levage de porte montés entre un arbre du cran de sûreté et le bras de porte. Le guide fixe, également cylindrique d'axe vertical, possède au moins un double chemin de came vertical et horizontal pour guider le bras successivement le long de ces deux directions pour respectivement le bloquer en levage vertical puis l'entraîner en pivotement.

Selon des modes de réalisation préférés :
- au moins un coulisseau de levage est associé à une rampe de levage de la porte pour former au moins un levier démultiplicateur de force d'initiation de levage de la porte pour briser la glace éventuellement formée sur l'avion, entre le périmètre de la porte et le fuselage;
- un moyen déclencheur interne ou externe à l'aéronef est apte à actionner le déverrouillage du cran de sûreté, ce moyen est choisi entre une poignée associée à un capteur de détection de fin de course et un bouton déclencheur d'un signal électrique en liaison avec le calculateur de porte;
- des capteurs de position sont agencés en regard des pièces en rotation équipées de pistes de roulements à effet Hall et sont reliés au calculateur de porte pour transmettre des informations de position de ces pièces;
- en cas d'ouverture d'urgence, seule la poignée interne est apte à déclencher directement le déverrouillage du cran de sûreté; ce déclenchement est provoqué par un signal de capteur disposé en fin de course de la poignée.
- un levier de levage démultiplicateur est disposé à chaque extrémité de l'arbre de cran de sûreté ;
- le chemin de came horizontal de la came fixe est choisi entre une rainure, un rebord de support et une piste horizontale afin de garder la porte levée et l'empêcher de descendre;
- les moyens de verrouillage du cran de sûreté comportent des verrous montés sur un arbre de verrou et associés à des contre-verrous montés sur l'arbre de cran de sûreté, la liaison de verrouillage entre les verrous et les contre-verrous étant libérée par le moyen déclencheur ;
- le support cylindrique est un fourreau mobile en rotation, comportant un chemin de came formé d'une portion hélicoïdale, globalement inclinée, en liaison avec un coulisseau de guidage venant du bras de porte ; et le fourreau est entouré d'un support de came cylindrique, formant le guide fixe à double chemin de came vertical et horizontal en liaison avec le même coulisseau de guidage ;
- le support cylindrique mobile est un fourreau entraîné en rotation par le moteur via une colonne verticale, ce fourreau comportant un chemin de came formé d'une portion hélicoïdale, globalement inclinée, en liaison avec un coulisseau de guidage venant du bras de porte ; et le guide fixe est constitué d'un deuxième fourreau coaxial au premier fourreau, formant le double chemin de came vertical et horizontal en liaison avec un deuxième coulisseau de guidage venant du bras de porte via un bras d'articulation traversée par la colonne verticale du moteur ;
- la colonne verticale est entraînée par un réducteur de vitesse associé au moteur électrique;
- le support cylindrique est une tige filetée entraînée en rotation par un motoréducteur via un écrou montée sur la vis, cette vis filetée formant un chemin de guidage hélicoïdal; et le guide fixe est constitué d'un fourreau de guidage coaxial à la tige et d'une paumelle venant d'une ferrure de fuselage. Ce fourreau forme un chemin de came vertical et horizontal, en liaison avec un coulisseau de guidage venant de la tige, et la paumelle forme un chemin de came horizontal, en liaison avec un autre coulisseau venant de la tige;
- la tige filetée est une tige à billes et l'écrou un écrou à billes.

Dans le présent texte, le terme « coulisseau » désigne aussi bien une pièce de roulement tel qu'un galet, mobile en rotation lors de son déplacement dans un chemin de came ou une glissière, qu'un doigt non rotatif, se déplaçant en translation dans un chemin de came ou une glissière. Le terme « moteur » ou motorisation électrique comprend les moteurs d'entraînement utilisés dans le domaine, les moteurs associés à des réducteurs de vitesse et les motoréducteurs.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue globale de la face interne d'une porte d'avion équipée d'un exemple de système de coordination de mouvements de porte selon l'invention mettant en oeuvre un jeu de galets de mouvement de porte;
- la figure 2, une vue en perspective du système de verrouillage du cran de sûreté de l'exemple précédent ;
- les figures 3a à 3c, des vues en perspective illustrant l'opération de levage du bras de porte dans l'exemple précédent ;
- les figures 4a à 4c, des vues latérales du levier de levage de porte et de l'arbre de cran de sûreté lors d'une phase initiale de levage de porte pour briser la glace recouvrant le périmètre de jonction entre le fuselage externe et la porte;
- les figures 5a à 5c, des vues en perspective (figures 5a et 5b) illustrant l'opération de pivotement du bras de porte par guidage horizontal selon l'exemple précédent, ainsi qu'une vue en coupe partielle montrant l'agencement du jeu de galets (figure 5c) ;
- les figures 6a et 6b, deux vues en perspective selon deux angles de vue complémentaires de la porte en position de fermeture, la porte étant équipée d'un deuxième exemple de système de coordination de mouvements à deux galets de mouvement de porte ;
- les figures 7a et 7b, deux vues en perspective selon deux angles de vue complémentaires de la porte en position de levage intermédiaire équipée du deuxième exemple de système de coordination de mouvements;
- les figures 8 à 10, des vues en perspective de la porte respectivement en position levée, en position intermédiaire lors de sa rotation horizontale de pivotement, et en position d'ouverture finale après sa rotation horizontale de pivotement, la porte étant équipée dudit deuxième exemple de système de coordination de mouvements;
- la figure 11, une vue en perspective d'un troisième exemple de système de coordination de mouvement de porte d'avion à deux galets et vis à billes selon l'invention, la porte étant en position de fermeture ;
- les figures 12a à 12c, des vues en perspective globale et détaillée, ainsi qu'une vue en coupe verticale dans un plan de symétrie du troisième exemple de système de coordination de mouvements, en position initiale de porte fermée ;
- les figures 13a et 13b, respectivement les figures 14a et 14b, des vues en perspective et en coupe verticale dans le plan de symétrie de ce troisième exemple, respectivement en position prête au levage de porte et en position de porte levée en position haute, et
- les figures 15a et 15b, des vues respectivement en perspective et en en coupe dans le plan de symétrie de ce troisième exemple en rotation autour de l'axe vertical afin de pivoter la porte en position ouverte

### DESCRIPTION DETAILLÉE

Dans tout le présent texte, les qualificatifs « vertical » et « horizontal » (et leurs dérivés), relatifs à la position d'éléments en utilisation, renvoient respectivement à la direction de la gravitation terrestre, en référence au sol ou sur l'eau, et à un plan perpendiculaire à cette direction. Par ailleurs, sur les figures, des signes de référence identiques renvoient aux mêmes éléments avec les mêmes fonctions ainsi qu'aux paragraphes qui les décrivent.

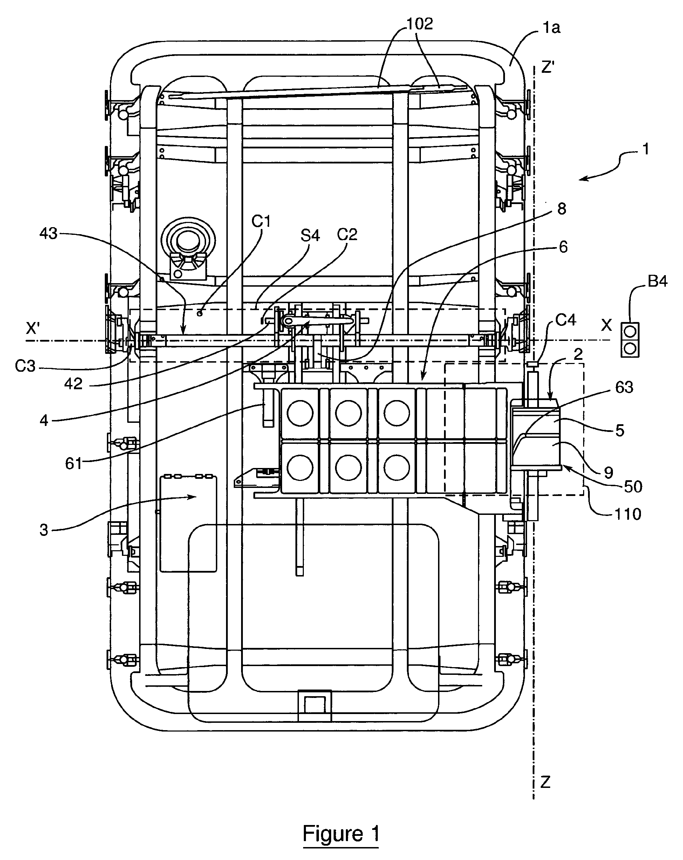

En référence à la figure 1, qui illustre une vue globale de la face interne 1a d'un exemple de porte d'avion 1 pour passagers selon l'invention, un moteur électrique unique d'actionnement 2 est géré par une unité de traitement numérique de données de commande 3, connue sous l'appellation « calculateur de porte ». Une poignée interne de verrouillage 4 permet de débloquer un système de verrouillage S4. Un capteur C1 est disposé au niveau de la fin de course de la poignée 4 afin de déclencher directement la mise en route du moteur 2 en cas d'ouverture d'urgence. Dans les conditions normales, cette mise en route est déclenchée par un double bouton poussoir B4 de type « on/off » (ouvert/fermé).

La porte électrique comporte également un système de coordination de mouvements 110, mouvement vertical de levage et horizontal de pivotement de la porte. Ce système 110 comporte le moteur électrique unique 2 d'actionnement, un fourreau cylindrique 50 d'axe de rotation vertical Z'Z, destiné à être entraîné en rotation par le moteur 2, et une came fixe 9.

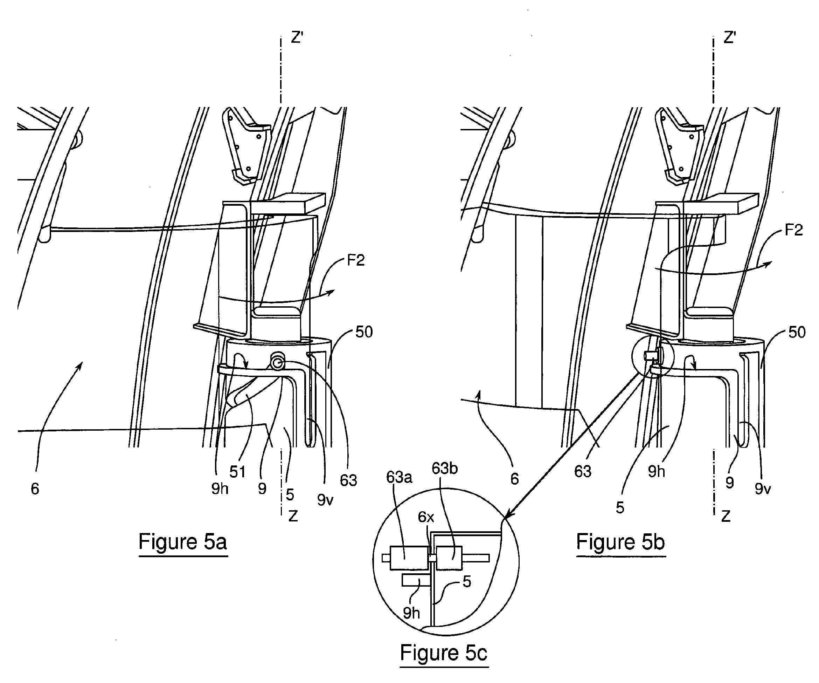

Le moteur électrique 2 est également en liaison avec une came mobile 5 formée dans le fourreau cylindrique 50 d'axe de rotation vertical Z'Z. Cette came mobile 5 est destinée à réaliser le levage de la porte 1 et son pivotement. Elle présente un chemin de guidage dit chemin de came 51 d'un bras de porte 6. Le bras 6 est articulé sur une charnière verticale 61 montée sur la porte 1, afin d'entraîner la porte 1 par pivotement autour du fuselage (voir la description en référence aux figures 5a et 5b). Ainsi, le bras de porte 6 reste libre en translation verticale selon l'axe Z'Z. En particulier, pendant les phases de vol, le bras 6 n'est pas chargé par le poids de la porte 1.

Par ailleurs, ce bras 6 est lié en rotation axiale selon l'axe X'X à un levier central de liaison 8, lui-même lié en rotation axiale sur un arbre de cran de sûreté 43.

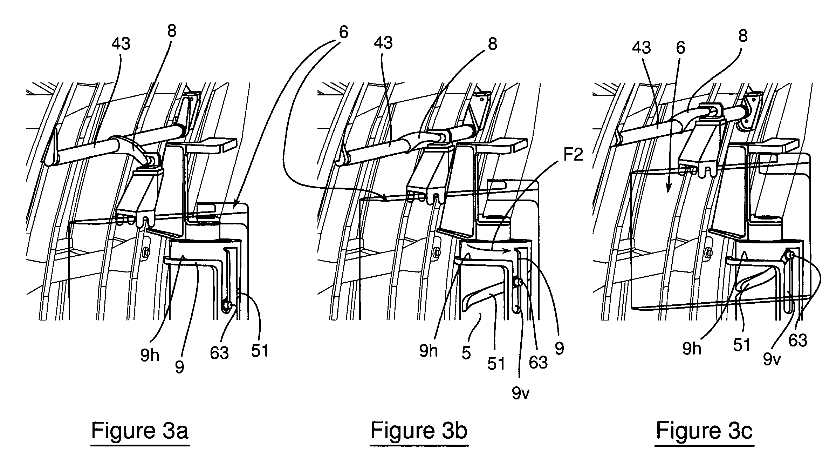

Une came fixe 9 agencée dans un fourreau cylindrique autour du fourreau 50 de came mobile 5 est également destinée à guider le bras de porte 6 le long de deux directions. Les figures 3a à 3c et 5a à 5c illustreront plus précisément ces guidages le long de deux directions.

De plus, un jeu de bielles de guidage 102 est prévu sur la partie supérieure de la porte 1 afin d'assurer la translation circulaire lors de l'ouverture de la porte.

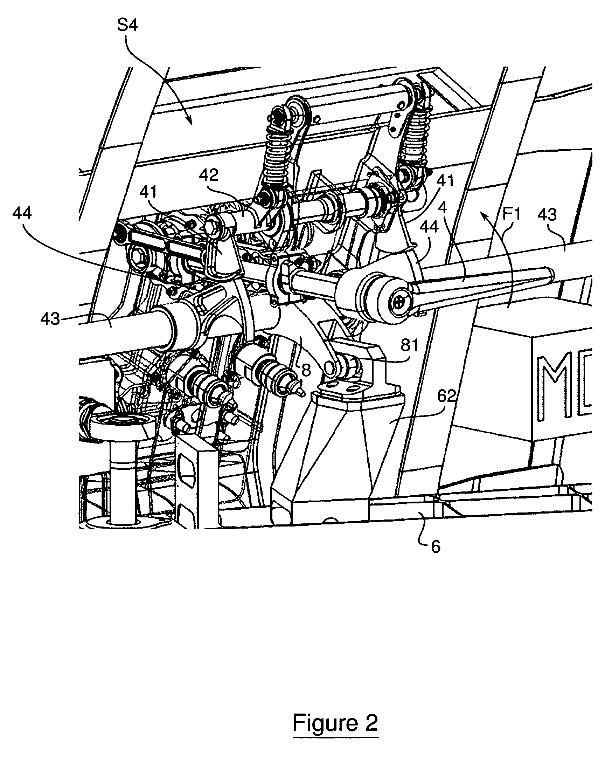

La vue perspective de la figure 2 montre de manière détaillée le système de verrouillage S4 du cran de sûreté.

Dans ce système, une action de levage (flèche F1) sur 180 degrés de la poignée interne de sûreté 4 (ou l'actionnement du bouton B4 de la figure 1) débloque le cran de sûreté constitué par le contact serré de verrous en forme de butées de verrouillage 41 d'un arbre de verrou 42 sur des contre-verrous 44 de l'arbre de cran de sûreté 43. L'arbre 43 est alors électriquement libéré de la butée 41 par rotation de l'arbre de verrou 42 entraîné par le moteur 2 actionné par le calculateur de porte 3 (cf. figure 1).

La rotation des arbres 42 et 43 est détectée et suivie électroniquement par des capteurs de position C2 et C3 (figure 1), respectivement agencés en regard d'une extrémité des arbres 42 et 43. Ces capteurs reçoivent une induction variable émise par des pistes à effet Hall intégrées dans les roulements des arbres. Les capteurs C3 envoient la position angulaire des arbres 42 et 43 au calculateur de porte.

Plus généralement, le calculateur gère les mouvements de la porte en fonction des informations transmises par l'ensemble des capteurs de position agencés en regard des pièces en rotation, en particulier - dans l'exemple illustré - en regard des capteurs des arbres 42 et 43 ainsi que celui de la colonne du moteur (voir ci-après).

Sur cette figure apparaît également le levier de liaison 8 monté en rotation axiale sur un galet de levier 81 aménagé dans une ferrure de liaison 62 du bras de porte 6.

L'opération de levage du bras de porte, qui débute l'ouverture de la porte, est illustrée par les vues perspectives des figures 3a à 3c. Sur ces figures (ainsi que sur les figures 5a à 5c) le bras de porte 6 apparaît en transparence afin de ne pas masquer les organes situés derrière.

La fin du déblocage du cran de sûreté, décrit ci-dessus, transmet, via le calculateur de porte 3, une commande au moteur électrique 2 pour entraîner en rotation la came mobile 5 d'axe de rotation vertical Z'Z. Pour ce faire la position angulaire de l'arbre de verrou 42 est détectée, par exemple par les capteurs à effet Hall de l'arbre de verrou 42.

Pour cette opération de levage, un curseur se présentant dans l'exemple sous la forme d'un jeu 63 de galets coaxiaux (voir figure 5c) venant du bras de porte 6, est positionné dans le chemin de came hélicoïdal et globalement incliné 51 formé sur le fourreau 50. Le galet 63 est également inscrit dans un chemin de guidage vertical dit chemin de came 9v de la came fixe 9.

En référence à la figure 3a, dans laquelle le cran de sûreté est débloqué mais l'arbre de cran de sûreté 43 reste en position « porte fermée », le galet 63 est simultanément disposé en extrémité basse du chemin de came incliné 51 et du chemin de came vertical 9v.

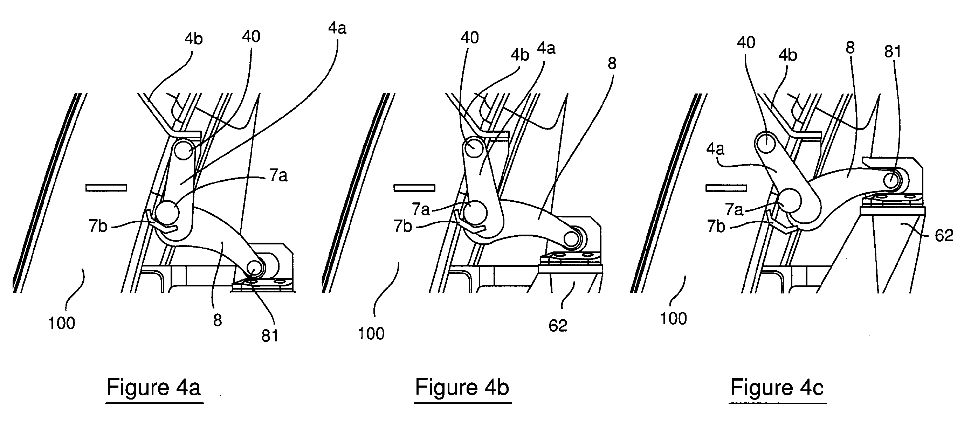

Après activation de la rotation de la came 5 (flèche F2) par le moteur électrique 2 et déverrouillage de l'arbre de cran de sûreté 43 (voir plus loin le passage en référence à la figure 4b), le galet 63 monte dans le chemin de came incliné 51 de la came mobile 5 ainsi que dans le chemin de came vertical 9v de la came fixe 9 (cf. figure 3b). Ce chemin de came vertical 9v étant fixe, le galet 63 monte verticalement selon la direction Z'Z et entraîne, dans cette montée, le bras de porte 6 qui se lève donc également verticalement. Le levier de liaison 8 est alors entraîné en rotation axiale par le bras de porte 6 et dégage l'arbre de cran de sûreté 43 de sa position verrouillée.

Le bras de porte 6 entraîne également une levée verticale de la porte 1 et cette levée se poursuit jusqu'à ce que le galet 63 atteigne (figure 3c) l'extrémité supérieure du chemin de came incliné 51 et du chemin de came vertical 9v.

Respectivement aux mêmes instants où sont prises les vues des figures 3a à 3c, les figures 4a à 4c illustrent plus précisément, en vues latérales dans l'encadrement 100 de la porte 1, la rotation de leviers de cran de sûreté 4a disposés aux extrémités de l'arbre de cran de sûreté 43, en vue du déverrouillage de l'arbre de cran de sûreté 43. En figure 4a, l'arbre 43 est en position verrouillée par rapport à des rampes de cran de sûreté 4b et à des galets de déverrouillage 40 agencés sur les leviers de cran de sûreté 4a. Les galets de déverrouillage 40 sont libérés, ce qui libère en même temps l'arbre de cran de sûreté 43 (figure 4b). La rotation du levier de liaison 8 entraîne alors celle des leviers de cran de sûreté 4a. En figure 4c, la porte est levée en position supérieure, cette levée correspond à celle de la ferrure de liaison 62.

Lors de cette rotation, des galets de levage 7a, montés en extrémité de l'arbre de cran de sûreté 43, viennent en appui sur des rampes de levage 7b ce qui permet de développer une force de levage importante pour briser éventuellement la glace recouvrant la peau externe de l'avion (figures 4b et 4c). Le moment exercé par le court bras de levier, formé entre les galets 7a et les rampes 7b, fournit un gros effort qui, guidé par la rampe de levage 7b, démultiplie la force de levage: la porte est soulevée de quelques millimètres avec un force suffisante pour briser, principalement par cisaillement, la glace localisée entre le périmètre de la porte et le fuselage.

En référence aux figures 5a et 5b, qui illustre l'opération de pivotement de la porte 1 lorsque la porte 1 est en position supérieure à la fin de l'opération de levage (telle qu'illustrée par la figure 3c), la came 5 continue à tourner (flèche F2). Le jeu de galets coaxiaux 63, qui bute sur l'extrémité du chemin de came incliné 51, n'est plus guidé par le chemin de came vertical 9v. Entraîné par le fourreau 50, il tourne avec ce dernier autour de l'axe verticale Z'Z, tout en restant en appui sur un chemin de guidage horizontal dit chemin de came 9h de la came 9. Cette rotation entraîne celle du bras de porte 6 par pivotement autour de la charnière 61 de la porte 1 (cf. figure 1) et donc l'avancée de la porte 1 le long du fuselage de l'avion.

La vue en coupe partielle de la figure 5c illustre plus particulièrement l'agencement des galets 63a et 63b constituant le jeu 63. Les galets 63 et 63b sont montés co-axialement sur un même axe 6x.

En fermeture de porte, les opérations de pivotement de porte, de descente de porte, de verrouillage et de blocage du cran de sûreté se déroulent en sens inverse par une commande de moteur 2 en rotation inverse et une fermeture de la poignée interne de sûreté 4 (figure 1).

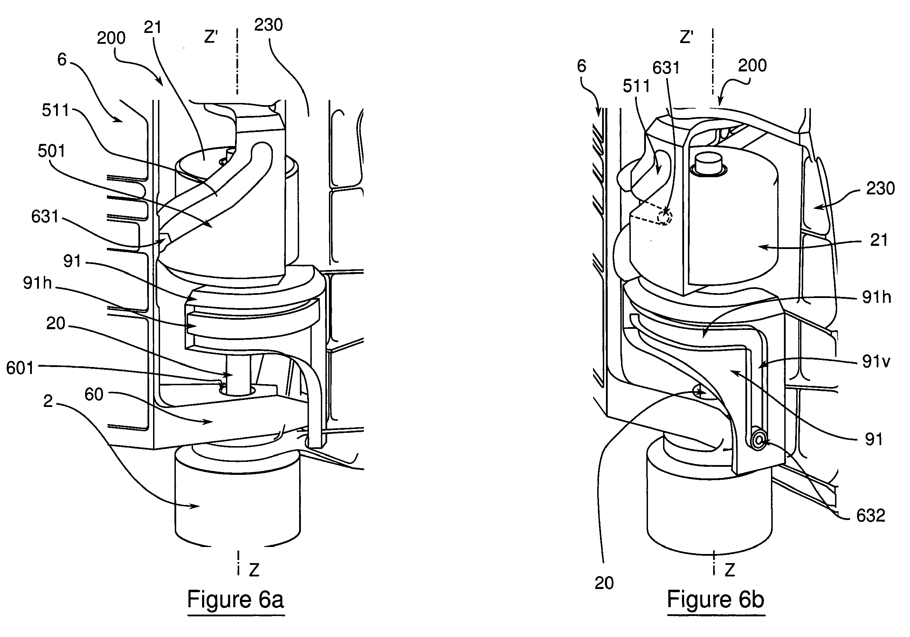

Un deuxième mode de réalisation de système de coordination de mouvements de porte à deux galets séparés est illustré aux figures 6a à 10. Les figures 6a et 6b représentent deux vues perspectives complémentaires de ce système 200 en position de fermeture de porte. Ces vues complémentaires 6a et 6b, ainsi que les vues 7a et 7b décrites ci-dessous, permettent d'illustrer les positions relatives des galets.

Dans ce deuxième mode, les fourreaux de chemins de came sont séparés : le système de coordination 200 comporte un fourreau cylindrique mobile 501, monté sur la colonne verticale 20 entraînée en rotation par le moteur 2 via un réducteur de vitesse 21, et un fourreau cylindrique fixe 91 coaxial au fourreau mobile 501 le long de l'axe Z'Z. La colonne 20 est suivie en rotation par un capteur C4 (figure 1) à effet Hall comme les arbres de verrou 42 et de cran de sûreté 43.

Le fourreau mobile 501 comporte un chemin de came 511 formé d'une portion hélicoïdale, globalement inclinée sur l'axe Z'Z, en liaison avec un premier galet de guidage 631 de mouvement de porte venant du bras de porte 6.

Par ailleurs, le fourreau fixe 91, coaxial au premier fourreau 501, forme un double chemin de came 91 h et 91 v, respectivement vertical et horizontal, en liaison avec un deuxième galet de guidage 632 de mouvement de porte. Ce deuxième galet 632 vient du bras de porte 6 via une chape inférieure dans laquelle un alésage 601 a été aménagé pour que la colonne verticale du moteur 20 puisse la traverser.

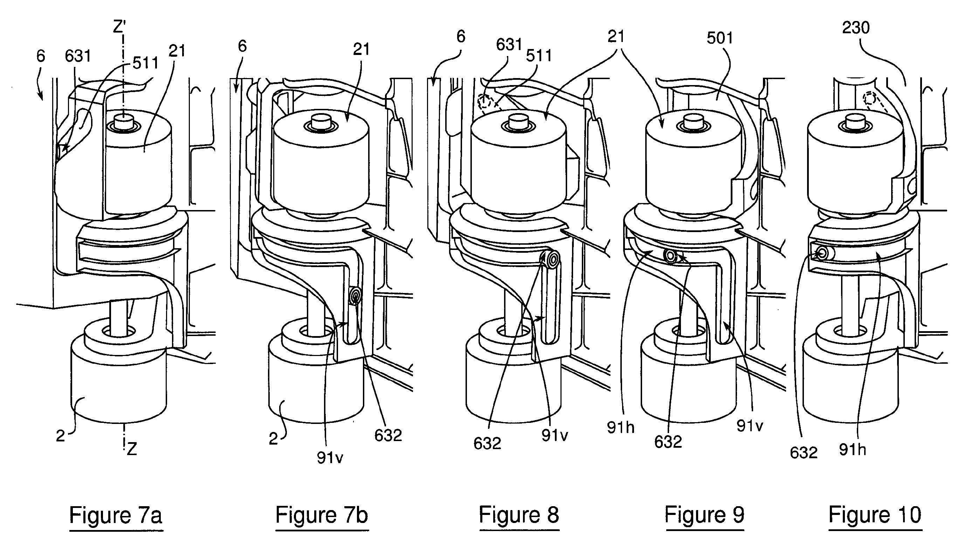

Les vues perspectives complémentaires des figures 7a et 7b illustrent une position de levage intermédiaire du bras de porte 6 (et donc de la porte d'avion). Sur la figure 7a, il apparaît que le premier galet 631 avance dans le chemin de came incliné 511, ce chemin étant en rotation autour de l'axe vertical Z'Z. Du fait que le deuxième galet 632 est guidé verticalement dans le chemin de came 91v (figure 7b), le premier galet 631 ne peut que se déplacer également selon un mouvement vertical lorsqu'il parcourt le chemin de came incliné 511.

En référence à la vue perspective de la figure 8, les galets 631 et 632 sont en butée supérieure des chemins de came 511 et 91v. Le bras de porte 6 (et donc la porte d'avion) sont alors en position de levage supérieur.

Comme illustré par la vue perspective de la figure 9, le premier galet 631 est alors entraîné en rotation d'axe Z'Z par le réducteur de vitesse 21 via le fourreau mobile 501. En effet, simultanément, le deuxième galet est guidé par le chemin de came horizontal 91 h qui s'étend en continuité du chemin de came vertical 91v.

Lors de cette rotation, le bras de porte 6 pivote et la figure 9 illustre le bras 6 en position de pivotement intermédiaire. Lorsque le deuxième galet 632 a atteint la butée du chemin de came horizontal 91 h (figure 10), le bras de porte 6 a entièrement pivoté et la porte est totalement dégagée le long de la peau externe du fuselage.

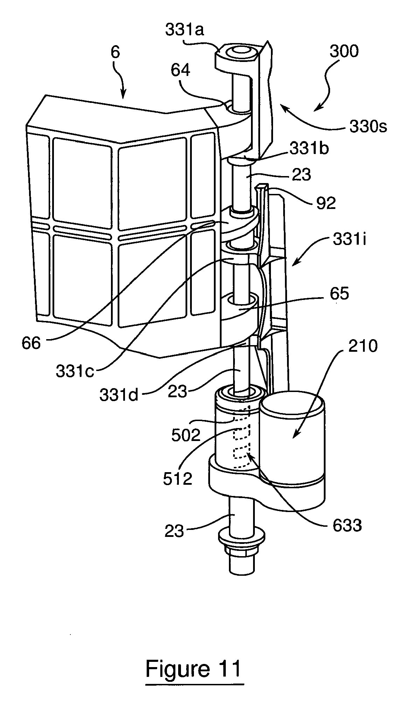

Un troisième mode de réalisation de système de coordination de mouvements de porte à galets et vis à billes est illustré aux figures 11 à 15b.

Sur la vue perspective de la figure 11, le système de coordination de mouvements 300 correspond à la position du bras de porte 6 lorsque la porte est fermée. Ce système de coordination 300 comporte une tige verticale 23, formant une vis à billes filetée 502, et un fourreau fixe 92 de guidage coaxial à la tige 23. Le système de coordination 300 repose sur des ferrures 330s et 330i via des paumelles cylindriques : deux paumelles supérieures 331 a et 331 b en liaison avec une ferrure supérieure 330s, une paumelle intermédiaire 331c et une paumelle inférieure 331d en liaison avec une ferrure inférieure 330i. Le fourreau 92, qui fait partie de la ferrure inférieure 330i, a pour base la paumelle intermédiaire 331c.

La tige 23, destinée à être entraînée en rotation par le motoréducteur 210, forme un chemin de guidage hélicoïdal 512 en liaison avec un écrou à billes 633 pour soulever le bras de porte 6.

Sur la figure 11, apparaissent également les chapes d'articulation supérieur et inférieur 64 et 65 de montage en rotation du bras de porte 6 sur la tige 23, ainsi qu'une chape intermédiaire 66. Ces chapes sont montées sur des bagues de guidage (non représentées).

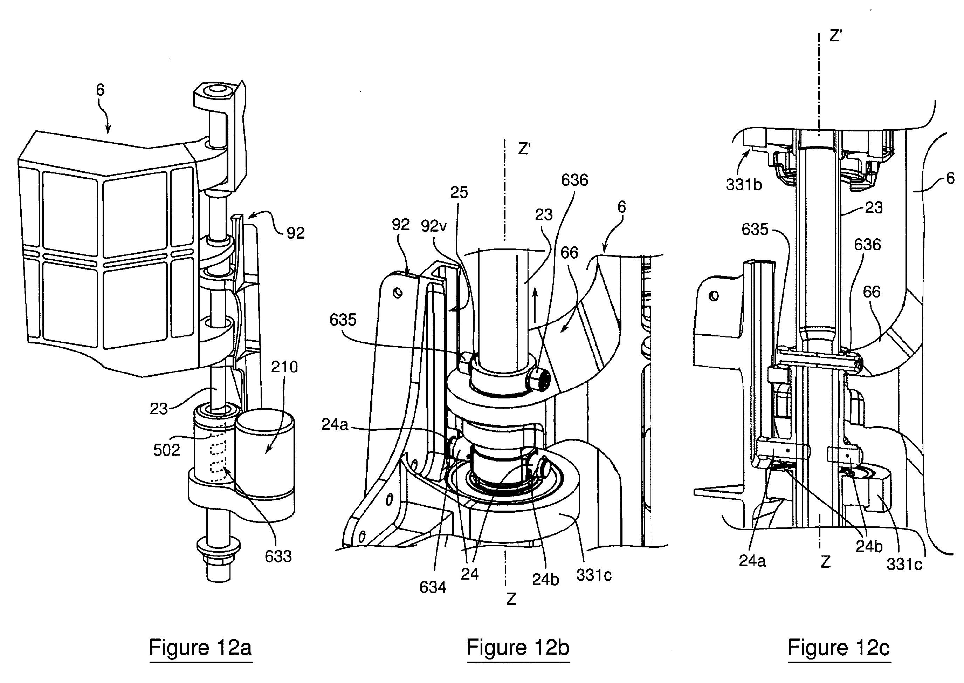

En référence aux vues en perspective et en coupe des figures 12a à 12c, qui illustrent le bras de porte 6 en position initiale de porte fermée, il apparaît que l'écrou à billes 633 est monté autour de la vis 502 de la tige 23. L'ensemble écrou et vis à billes forme un système de rotation autour de la tige 23 quasiment dénué de frottement.

Le fourreau fixe 92 de la ferrure intermédiaire 331c comporte un chemin de came vertical, 92v (figure 12b et 12c). Ce chemin de came vertical 92v est dédié à un galet de guidage 634 monté sur une portion 24a de tige transversale 24, constituée de deux portions coaxiales 24a et 24b et solidaire de la tige 23. Cette tige transversale 24 est amenée à entraîner verticalement le bras de porte 6 via la chape intermédiaire 66. La vis 23 est traversée par une autre tige transversale supérieure 25 montée au-dessus de la chape intermédiaire 66 du bras de porte 6. Cette tige transversale supérieure 25 est terminée par deux galets 635 et 636 montés pour tourner autour de cette tige transversale 25.

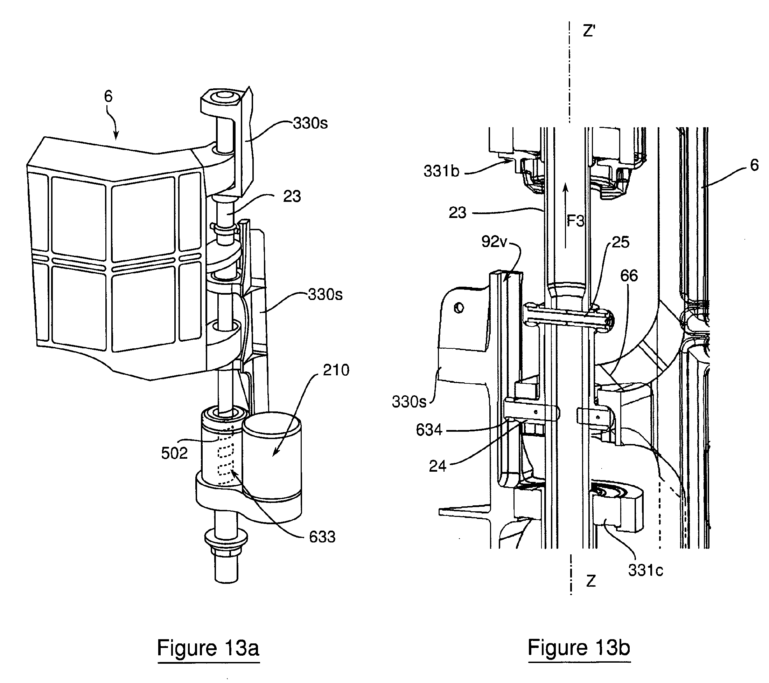

Après déclenchement du motoréducteur par le bouton B4 ou par le capteur C1 (figure 1), la tige 23 est entraînée en translation dans le sens de la montée (flèche F3) le long de l'axe Z'Z via l'écrou à billes 633 en liaison avec la vis filetée 502 (figure 12a). Les vues en perspective et en coupe des figures 13a et 13b illustrent une position de tige 23 prête au levage du bras de porte.

De la position initiale de porte fermée (figures 12a à 12c) à la position de tige 23 prête au levage de porte (figures 13a et 13b), la vis 502 est bloquée mécaniquement en rotation par le guidage vertical imposé par le galet 634 se déplaçant dans le chemin de came vertical 92v du fourreau fixe 92. Dans la position prête au levage (figures 13a et 13b), la tige transversale 24 est venue s'encastrer dans la chape intermédiaire 66 afin de l'entraîner verticalement. La tige transversale 25 s'est élevée avec la tige 23.

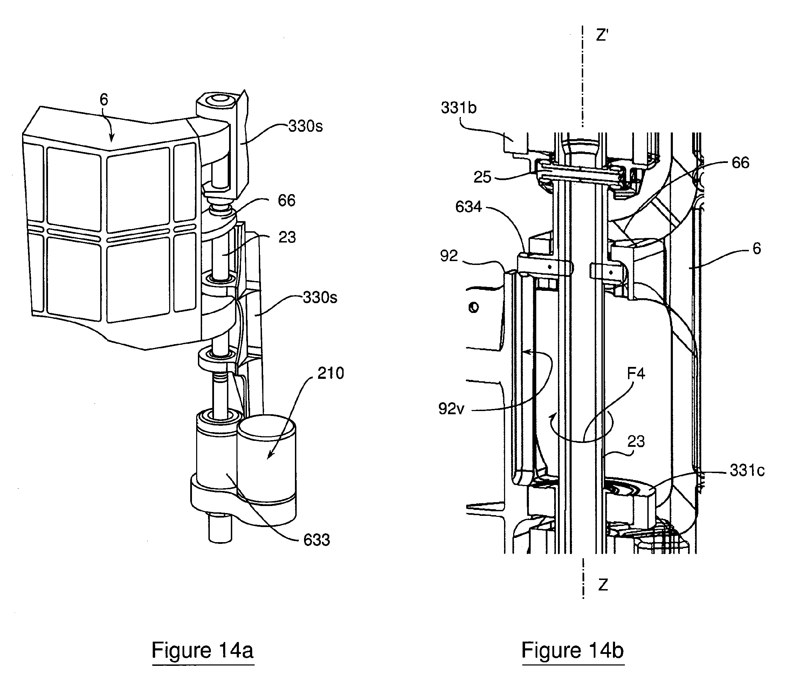

Un tel entraînement vertical de la porte (toujours selon la flèche F3 le long de l'axe Z 'Z), via la chape intermédiaire 66 du bras de porte 6, aboutit à la position de levage de la porte dite haute. Cette position est illustrée par les vues en perspective et en coupe des figures 14a et 14b. A ce stade, le galet 634 est sorti du chemin de came verticale 92v du fourreau fixe 92 et, co-axialement selon l'axe vertical Z'Z, la tige transversale supérieure 25 est venue s'encastrer dans la paumelle supérieure 331 b.

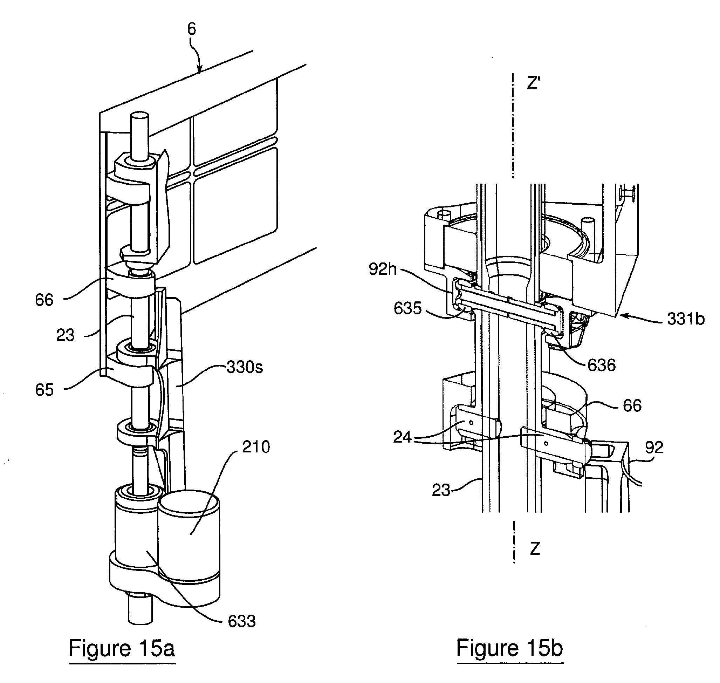

En référence aux vues en perspective et en coupe des figures 15a et 15b, le système de coordination de mouvements 300 est en phase de rotation pour entraîner le bras 6 en pivotement et la porte en ouverture le long du la peau externe du fuselage de l'avion.

Dans cette phase, la sortie du chemin de came vertical 92v du galet 634 (figure 14a et 14b) libère l'entraînement en rotation (flèche F4) de la tige 23 par l'écrou 633. Cet entraînement en rotation était jusque-là mécaniquement bloquée par le chemin de guidage vertical 92v. Les galets 635 et 636 se déplacent alors dans un chemin de came horizontal 92h formé dans la paumelle supérieure 331b (figure 15b). L'entraînement en translation verticale selon l'axe Z'Z est alors bloqué par la paumelle 331b. Par ailleurs, la tige transversale inférieure 24 est également entraînée horizontalement en rotation dans une cannelure torique prévue dans la chape intermédiaire 66.

L'invention n'est pas limitée aux exemples de réalisation décrits et représentés. Ainsi, une batterie peut être prévue pour fournir de l'énergie électrique dans le cas où le réseau de bord n'est plus capable de fournir de courant électrique, en particulier en cas d'urgence. De plus, il est possible de prévoir un dispositif manuel de substitution pour l'ouverture de la porte lorsque ni le réseau de bord ni la batterie ne sont capables de fournir du courant électrique. Un tel dispositif n'est pas directement accessible pour ne pas être déréglé et est connecté directement au moteur ou au motoréducteur.

L'aéronef est en général un avion mais pourrait être un cargo et, plus généralement, tout engin volant apte à transporter des passagers.

Par ailleurs, plusieurs chemins de came parallèles peuvent être formés sur les fourreaux, ces chemins de came et les coulisseaux correspondants sont alignés verticalement dans le chemin de came vertical de la came fixe.

## Revendications

1. Procédé d'ouverture/fermeture d'une porte électrique d'aéronef pour cellule pressurisée (1), porte passagers ou de service, **caractérisé en ce qu'**il consiste, sous l'entraînement d'une motorisation électrique unique (2) commandée par un calculateur de porte (3) :
- en ouverture de porte (1), après désarmement d'un toboggan, à enchaîner successivement des phases séquentielles de déverrouillage, de levage et de pivotement de la porte par
- déverrouillage d'un cran de sûreté (43, 4a, 4b) de la porte (1) par libération de moyens de verrouillage (41, 42, 44) d'un système de verrouillage (S4) ;
- levage électrique de la porte (1) par un bras de porte (6) articulé sur une charnière verticale (61) montée sur la porte (1), et entraîné par le moteur électrique (2) en guidage mécaniquement forcé selon l'axe vertical (Z'Z) par blocage d'un entraînement en rotation horizontal selon le même axe (Z'Z) ;
- libération d'un guidage horizontal lorsque le guidage vertical arrive en butée, puis entraînement en pivotement du bras de porte (6) selon un guidage horizontal le long d'une surface cylindrique (50, 501, 502) d'axe de rotation vertical (Z'Z) apte à dégager la porte (1) le long d'un fuselage externe de l'avion;
- en fermeture de porte (1), à entraîner le bras de porte (6) et la porte (1) en rotation de sens inverse que celui de l'ouverture par guidage horizontal le long de la surface cylindrique, à arrêter le guidage horizontal de pivotement du bras de porte lorsque ce guidage arrive en butée, puis à baisser le bras de porte (6) et la porte (1) par un guidage mécaniquement forcé selon l'axe vertical (Z'Z) par blocage de l'entraînement en rotation.

2. Procédé d'ouverture/fermeture selon la revendication 1, dans lequel le levage électrique est initiée par une phase d'amorçage à l'aide d'un levier démultiplicateur de quelques millimètres à une dizaine de millimètres qui produit un effort suffisamment élevé pour briser la glace éventuellement formée sur l'avion, entre le périmètre de la porte et le fuselage.

3. Procédé d'ouverture/fermeture selon l'une des revendications 1 ou 2, dans lequel le calculateur de porte (3) gère les mouvements de la porte (1) en fonction des informations transmises par l'ensemble des capteurs de position (C2, C3, C4) agencés en regard des pièces en rotation (42, 43, 20) équipées de pistes de roulements à effet Hall.

4. Procédé d'ouverture/fermeture selon l'une des revendications 1 à 3 dans lequel, en cas d'urgence, le déverrouillage du cran de sûreté de la porte est déclenché en une seule opération par actionnement d'une poignée interne qui, par détection de son déplacement, transmet un signal de déverrouillage au calculateur de porte.

5. Porte électrique d'aéronef pour cellule pressurisée (1), à savoir porte passagers ou de service, **caractérisée en ce qu'**elle comporte un système de verrouillage (S4) d'un cran de sûreté (43, 4a, 4b), et un système de coordination de mouvements de porte (110, 200, 300), comportant un moteur électrique unique (2, 21, 210) d'actionnement des systèmes de verrouillage et de coordination (S4 ; 110, 200, 300), géré par un calculateur de porte (3), un support cylindrique (50, 501, 502) d'axe de rotation vertical (Z'Z), destiné à être entraîné en rotation par le moteur (2), et un guide fixe (9, 91 92), **en ce que** le support (50) présente au moins un chemin de guidage (51, 511, 512) en liaison avec un bras (6), ce chemin de guidage (51, 511, 512) étant au moins partiellement hélicoïdal selon l'axe vertical (Z'Z) du support (50, 501, 502), **en ce que** le bras de porte (6) est apte à pivoter autour d'une charnière verticale (61) et est lié à des moyens de levage de porte (7a, 7b, 8, 62) montés entre un arbre du cran de sûreté (43) et le bras (6), et **en ce que** le guide fixe (9, 91, 92), également cylindrique d'axe vertical (Z'Z), possède au moins un double chemin de came vertical (9v, 91v, 92v) et horizontal (9h, 91 h, 92h) pour guider le bras (6) successivement le long de ces deux directions pour respectivement le bloquer en levage vertical puis l'entraîner en pivotement.

6. Porte électrique d'aéronef pour cellule pressurisée selon la revendication précédente, dans laquelle au moins un coulisseau de levage (7a) est associé à une rampe de levage (7b) de la porte (1) pour former au moins un levier démultiplicateur de force d'initiation de levage de la porte (1) pour briser la glace éventuellement formée sur l'avion, entre le périmètre de la porte (1) et le fuselage.

7. Porte électrique d'aéronef pour cellule pressurisée selon l'une des revendications 5 ou 6, dans laquelle un moyen déclencheur interne ou externe à l'aéronef, apte à déclencher le déverrouillage du cran de sûreté, est choisi entre une poignée (4) associée à un capteur (C1) de détection de fin de course de la poignée (4) et un bouton (B4) déclencheur d'un signal électrique en liaison avec le calculateur de porte (3).

8. Porte électrique d'aéronef pour cellule pressurisée selon l'une des revendications 5 à 7, dans laquelle des capteurs de position (C2, C3, C4) sont agencés en regard des pièces en rotation (4, 43, 20) équipées de pistes de roulements à effet Hall et sont reliés au calculateur de porte (3) pour transmettre des informations de position de ces pièces.

9. Porte électrique d'aéronef pour cellule pressurisée selon l'une des revendications 5 à 8, dans laquelle seule la poignée interne (4) est apte à actionner directement le déverrouillage du cran de sûreté en cas d'ouverture d'urgence.

10. Porte électrique d'aéronef pour cellule pressurisée selon la revendication 6, dans laquelle un levier de levage démultiplicateur (40) est disposé à chaque extrémité de l'arbre de cran de sûreté (43).

11. Porte électrique d'aéronef pour cellule pressurisée selon l'une des revendications 5 à 10, dans laquelle, le chemin de came horizontal (9h) de la came fixe (9) est choisi entre une rainure, un rebord de support et une piste horizontale afin de garder la porte levée et l'empêcher de descendre.

12. Porte électrique d'aéronef pour cellule pressurisée selon l'une des revendications 5 à 11, dans laquelle le système de verrouillage mécanique du cran de sûreté (43, 4a, 4b) comporte des verrous (41) montés sur un arbre de verrou (42) et associés à des contre-verrous (44) montés sur un arbre de cran de sûreté (43), la liaison de verrouillage entre les verrous et les contre-verrous étant libérée par le moyen déclencheur (4).

13. Porte électrique d'aéronef pour cellule pressurisée selon l'une des revendications 5 à 12, dans laquelle le support cylindrique est un fourreau (50) mobile en rotation, comportant un chemin de came (51) formé d'une portion hélicoïdale, globalement inclinée, en liaison avec un coulisseau de guidage (63) venant du bras de porte (6), et dans laquelle le fourreau est entouré d'un support de came cylindrique (9), formant le guide fixe à double chemin de came vertical (9v) et horizontal (9h) en liaison avec un même jeu de coulisseaux de guidage (63)a, 63b).

14. Porte électrique d'aéronef pour cellule pressurisée selon l'une des revendications 5 à 12, dans laquelle le support cylindrique mobile est un fourreau (501) entrainé en rotation par le moteur (2) via une colonne verticale (20), ce fourreau comportant un chemin de came (511) formé d'une portion hélicoïdale, globalement inclinée, en liaison avec un coulisseau de guidage (631) venant du bras de porte (6), et dans laquelle le guide fixe est constitué d'un deuxième fourreau coaxial au premier fourreau, formant le double chemin de came vertical et horizontal en liaison avec un deuxième coulisseau de guidage (632) venant du bras de porte via une chape d'articulation (60) traversé par la colonne du moteur (20).

15. Porte électrique d'aéronef pour cellule pressurisée selon la revendication précédente, dans laquelle la colonne verticale (20) est entraînée par un réducteur de vitesse (21) associé au moteur électrique (2).

16. Porte électrique d'aéronef pour cellule pressurisée selon l'une des revendications 5 à 12, dans laquelle le support cylindrique est une tige (23) formant une vis filetée (502) entraînée en rotation par un motoréducteur (210) via un écrou (633) monté sur la vis (502), cette vis filetée (502) formant un chemin de guidage hélicoïdal (512), dans laquelle le guide fixe est constitué d'un fourreau de guidage (92) coaxial à la tige (23) et d'une paumelle (331b) venant d'une ferrure de fuselage (330s), ce fourreau (92) formant un chemin de came vertical (92v), en liaison avec un coulisseau de guidage (634) venant de la tige (23), et la paumelle (331b) formant un chemin de came horizontal (92h), en liaison avec au moins un autre coulisseau (635, 636) venant de la tige (23).

17. Porte électrique d'aéronef pour cellule pressurisée selon la revendication précédente, dans laquelle la tige filetée est une tige à billes (502) et l'écrou un écrou à billes (633).

## Patentansprüche

1. Verfahren zum Öffnen/Schließen einer elektrischen Flugzeugtür für eine Druckkabine (1), eine Passagiertür oder eine Serviceklappe, **dadurch gekennzeichnet, dass** es bei einem Antrieb durch einen einzigen Elektromotor (2), der durch einen Türrechner (3) gesteuert wird, aus den folgenden Schritten besteht:
- beim Öffnen der Tür (1) nach dem Auslösen einer Rutsche nacheinander Verknüpfen aufeinander folgendes Phasen des Entriegelns, des Anhebens und des Schwenkens der Tür durch
- Entriegeln einer Sicherheitsraste (43, 4a, 4b) der Tür (1) durch Freigabe von Verriegelungsmitteln (41, 42, 44) eines Verriegelungssystems (S4);
- elektrisches Anheben der Tür (1) durch einen Türarm (6), der an einem an der Tür (1) montierten vertikalen Scharnier (61) angelenkt ist und durch den Elektromotor (2) unter erzwungener mechanischer Führung längs der vertikalen Achse (Z'Z) durch Blockieren eines horizontalen rotatorischen Antriebs längs derselben Achse (Z'Z) angetrieben wird;
- Freigeben einer horizontalen Führung, wenn die vertikale Führung einen Anschlag erreicht, dann schwenkendes Antreiben des Türarms (6) längs einer horizontalen Führung längs einer zylindrischen Oberfläche (50, 501, 502) mit vertikaler Drehachse (Z'Z), wodurch die Tür (1) längs eines äußeren Rumpfs des Flugzeugs außer Eingriff gebracht werden kann;
- beim Schließen der Tür (1) rotatorisches Antreiben des Türarms (6) und der Tür (1) in einer Richtung, die zu jener beim Öffnen entgegengesetzt ist, durch horizontale Führung längs der zylindrischen Oberfläche, Beenden der horizontalen Schwenkführung des Türarms, wenn diese Führung einen Anschlag erreicht, anschließend Absenken des Türarms (6) und der Tür (1) durch erzwungene mechanische Führung längs der vertikalen Achse (Z'Z) durch Blockieren des rotatorischen Antriebs.

2. Öffnungs-/Schließverfahren nach Anspruch 1, wobei das elektrische Anheben durch eine Zündungsphase mit Hilfe eines Untersetzungshebels von einigen Millimetern bis zu einigen zehn Millimetern, der eine ausreichend hohe Kraft erzeugt, um das Eis, das sich eventuell auf dem Flugzeug gebildet hat, zwischen dem Umfang der Tür und dem Rumpf zu zerbrechen, eingeleitet wird.

3. Öffnungs-/Schließverfahren nach einem der Ansprüche 1 oder 2, wobei der Türrechner (3) Bewegungen der Tür (1) als Funktion von Informationen steuert, die von der Gesamtheit von Positionssensoren (C2, C3, C4) übertragen werden, die gegenüber von Drehteilen (42, 43, 20) angeordnet sind, die mit Laufflächen mit Hall-Effekt ausgerüstet sind.

4. Öffnungs-/Schließverfahren nach einem der Ansprüche 1 bis 3, wobei in einem Notfall die Entriegelung der Sicherheitsraste der Tür durch einen einzigen Vorgang durch Betätigen eines Innengriffs, der durch Detektion seiner Verlagerung ein Entriegelungssignal an den Türrechner sendet, ausgelöst wird.

5. Elektrische Flugzeugtür für eine Druckkabine (1), nämlich eine Passagiertür oder eine Serviceklappe, **dadurch gekennzeichnet, dass** sie ein Verriegelungssystem (S4) mit einer Sicherheitsraste (43, 4a, 4b) und ein System zum Koordinieren der Türbewegungen (110, 200, 300) umfasst, das einen einzigen Elektromotor (2, 21, 210) für die Betätigung von Verriegelungs- und Koordinationssystemen (S4; 110, 200, 300), der durch einen Türrechner (3) gesteuert wird, einen zylindrischen Träger (50, 501, 502) mit vertikaler Drehachse (Z'Z), der dazu bestimmt ist, durch den Motor (2) rotatorisch angetrieben zu werden, und eine feste Führung (9, 91, 92) umfasst, dass der Träger (50) wenigstens einen Führungsweg (51, 511, 512) in Verbindung mit einem Arm (6) aufweist, wobei dieser Führungsweg (51, 511, 512) wenigstens teilweise längs der vertikalen Achse (Z'Z) des Trägers (50, 501, 502) wenigstens teilweise schraubenlinienförmig ist, dass der Türarm (6) um ein vertikales Scharnier (61) schwenken kann und mit Mitteln (7a, 7b, 8, 62) zum Anheben der Tür verbunden ist, die zwischen einer Welle der Sicherheitsraste (43) und dem Arm (6) montiert sind, und dass die feste Führung (9, 91, 92), die ebenfalls zylindrisch mit vertikaler Achse (Z'Z) ist, wenigstens eine vertikale (9v, 91v, 92v) und horizontale (9h, 91h, 92h) Doppelnockenkurve besitzt, um den Arm (6) nacheinander längs der zwei Richtungen zu führen, um jeweils sein vertikales Anheben zu blockieren und ihn dann schwenkend anzutreiben.

6. Elektrische Flugzeugtür für eine Druckkabine nach dem vorhergehenden Anspruch, wobei wenigstens ein Anhebegleitblock (7a) einer Anheberampe (7b) der Tür (1) zugeordnet ist, um wenigstens einen Kraftuntersetzungshebel zum Einleiten des Anhebens der Tür (1) zu bilden, um das Eis, das sich eventuell auf dem Flugzeug gebildet hat, zwischen dem Umfang der Tür (1) und dem Rumpf zu zerbrechen.

7. Elektrische Flugzeugtür für eine Druckkabine nach einem der Ansprüche 5 oder 6, wobei ein Auslösemittel innerhalb oder außerhalb des Flugzeugs, das die Entriegelung der Sicherheitsraste auslösen kann, zwischen einem Griff (4), der einem Sensor (C1) für die Detektion des Bahnendes des Griffs (4) zugeordnet ist, und einer Taste (B4) zum Auslösen eines elektrischen Signals, die mit dem Türrechner (3) in Verbindung steht, gewählt wird.

8. Elektrische Flugzeugtür für eine Druckkabine nach einem der Ansprüche 5 bis 7, wobei gegenüber Drehteilen (4, 43, 20), die mit Laufbahnen mit Hall-Effekt ausgerüstet sind, Positionssensoren (C2, C3, C4) angeordnet sind und mit dem Türrechner (3) verbunden sind, um Positionsinformationen von diesen Teilen zu übertragen.

9. Elektrische Flugzeugtür für eine Druckkabine nach einem der Ansprüche 5 bis 8, wobei im Fall einer Notöffnung nur der Innengriff (4) direkt die Entriegelung der Sicherheitsraste betätigen kann.

10. Elektrische Flugzeugtür für eine Druckkabine nach Anspruch 6, wobei ein Untersetzungs-Anhebehebel (40) an jedem Ende der Welle der Sicherheitsraste (43) angeordnet ist.

11. Elektrische Flugzeugtür für eine Druckkabine nach einem der Ansprüche 5 bis 10, wobei die horizontale Nockenkurve (9h) des festen Nockens (9) zwischen einer Rille, einem Tragrand und einer horizontalen Bahn gewählt wird, um die angehobene Tür zu halten und ihr Absenken zu verhindern.

12. Elektrische Flugzeugtür für eine Druckkabine nach einem der Ansprüche 5 bis 11, wobei das System zum mechanischen Verriegeln der Sicherheitsraste (43, 4a, 4b) Riegel (41) umfasst, die an einer Riegelwelle (42) montiert sind und Gegenriegeln (44) zugeordnet sind, die an einer Welle der Sicherheitsraste (43) montiert sind, wobei die Verriegelungsverbindung zwischen den Riegeln und Gegenriegeln durch das Auslösemittel (4) freigegeben wird.

13. Elektrische Flugzeugtür für eine Druckkabine nach einem der Ansprüche 5 bis 12, wobei der zylindrische Träger eine rotatorisch bewegliche Hülse (50) ist, die eine Nockenkurve (51) aufweist, die mit einem im Allgemeinen geneigten schraubenlinienförmigen Abschnitt ausgebildet ist, der mit einem Führungsgleitblock (63), der einteilig mit dem Türarm (6) gebildet ist, in Verbindung steht, und wobei die Hülse von einem zylindrischen Nockenträger (9) umgeben ist, der die feste Führung mit vertikaler (9v) und horizontaler (9h) Doppelnockenkurve bildet und mit dem gleichen Satz von Gleitblöcken (63a, 63b) in Verbindung steht.

14. Elektrische Flugzeugtür für eine Druckkabine nach einem der Ansprüche 5 bis 12, wobei der bewegliche zylindrische Träger eine Hülse (501) ist, die durch den Motor (2) über eine vertikale Säule (20) rotatorisch angetrieben wird, wobei diese Hülse eine Nockenkurve (511) aufweist, die mit einem im Allgemeinen geneigten schraubenlinienförmigen Abschnitt ausgebildet ist und mit einem Gleitführungsblock (631), der mit dem Türarm (6) einteilig ausgebildet ist, in Verbindung steht, und wobei die feste Führung aus einer zu der ersten Hülse koaxialen zweiten Hülse gebildet ist, die die vertikale und horizontale Doppelnockenkurve bildet und mit einem zweiten Führungsgleitblock (632), der mit dem Türarm einteilig ausgebildet ist, über ein Gabelgelenk (60), durch das die Motorsäule (20) verläuft, verbunden ist.

15. Elektrische Flugzeugtür für eine Druckkabine nach dem vorhergehenden Anspruch, wobei die vertikale Säule (20) durch ein Untersetzungsgetriebe (21), das dem Elektromotor (2) zugeordnet ist, angetrieben wird.

16. Elektrische Flugzeugtür für eine Druckkabine nach einem der Ansprüche 5 bis 12, wobei der zylindrische Träger ein Stift (23) ist, der eine Gewindeschraube (502) bildet, die durch einen Getriebemotor (210) über eine an der Schraube (502) montierte Mutter (633) rotatorisch angetrieben wird, wobei diese Gewindeschraube (502) einen schraubenlinienförmigen Führungsweg (512) bildet, wobei die feste Führung aus einer Führungshülse (92), die zu dem Stift (23) koaxial ist, und aus einer Türangel (331b), die einteilig mit einem Beschlag (330s) des Rumpfs ausgebildet ist, gebildet ist, wobei diese Hülse (92) eine vertikale Nockenkurve (92v) bildet, die mit einem Führungsgleitblock (634), der einteilig mit dem Stift (23) ausgebildet ist, in Verbindung ist, und wobei die Türangel (331b) eine horizontale Nockenkurve (92h) bildet, die mit wenigstens einem weiteren Gleitblock (635, 636), der einteilig mit dem Stift (23) ausgebildet ist, in Verbindung ist.

17. Elektrische Flugzeugtür für eine Druckkabine nach dem vorhergehenden Anspruch, wobei der Gewindestift ein Kugelstift (502) ist und die Mutter eine Kugelmutter (633) ist.

## Claims

1. A method for opening/closing an aircraft electric door for a pressurized airframe (1), passenger or service door, in which it consists, driven by a single electric motor (2) controlled by a door computer (3):
- for opening the door (1), after disarming a toboggan, of successively linking the sequential phases of unlocking, lifting and pivoting the door by
- unlocking a safety catch (43, 4a, 4b) of the door (1) by releasing locking means (41, 42, 44) of a locking system (S4);
- electrically lifting the door (1) with a door arm (6) hinged on a vertical hinge (61) mounted on the door (1), and, driven by the electric motor (2), with mechanically forced guidance along the vertical axis (Z'Z) by preventing a horizontal rotational drive along the same axis (Z'Z);
- releasing a horizontal guideway when the vertical guideway comes against the stop, then pivoting the door arm (6) on a horizontal guideway along a cylindrical surface (50, 501, 502) of a vertical axis (Z'Z) of rotation adapted to disengage the door (1) along the external aircraft fuselage;
- for closing the door (1), of rotating the door arm (6) and the door (1) in the reverse direction to that for opening, by horizontal guidance along the cylindrical surface, to stop the horizontal guidance for pivoting the door arm when this guidance comes to the stop, then of lowering the door arm (6) and the door (1), with mechanically forced guidance along the vertical axis (Z'Z) by preventing the rotational drive.

2. The method for opening/closing as claimed in claim 1, in which electrical lifting is initiated by an initiating phase using a lever for multiplying from a few millimeters to about ten millimeters that produces a sufficiently high force to break the ice that may have formed on the aircraft, between the perimeter of the door and the fuselage.

3. The method for opening/closing as claimed in one of claims 1 or 2, in which the door computer (3) manages the movements of the door (1) according to the information transmitted by all of the position sensors (C2, C3, C4) fitted opposite the rotating parts (42, 43, 20) equipped with roller bearing Hall effect tracks.

4. The method for opening/closing as claimed in one of claims 1 to 3, in which, in the event of an emergency, the unlocking of the door safety catch is triggered in a single operation by actuating an internal handle, which, through detection of its movement, transmits an unlocking signal to the door computer.

5. An aircraft electric door for a pressurized airframe (1), namely a passenger or service door, **characterized in that** it comprises a locking system (S4) for locking a safety catch (43, 4a, 4b) and a system for coordinating door movements (110, 200, 300) having a single electric motor (2, 21, 210) for actuating the locking and coordination systems (S4; 110, 200, 300), managed by a door computer (3), a cylindrical support (50, 501, 502) having a vertical rotation axis (Z'Z) intended to be rotated by the motor (2), and a fixed guide (9, 91, 92), **in that** the support (50) has at least one guideway (51, 511, 512) linked with the arm (6), this guideway (51, 511, 512) being at least partially helical along the vertical axis (Z'Z) of the support (50, 501, 502), **in that** the door arm (6) is capable of pivoting around a vertical hinge (61) and is linked with door lifting means (7a, 7b, 8, 62) mounted between a shaft of the safety catch (43) and the arm (6), and **in that** the fixed guide (9, 91, 92), likewise cylindrical with a vertical axis (Z'Z), possesses at least one double, vertical (9v, 91 v, 92v) and horizontal (9h, 91 h, 92h), camway for guiding an arm (6) successively in these two directions, respectively to prevent it from lifting vertically and then to pivot it.

6. The aircraft electric door for a pressurized airframe as claimed in the preceding claim, in which at least one lifting slider (7a) is associated with a lifting ramp (7b) of the door (1) in order to form at least one lever for multiplying the initiating force for lifting the door (1) in order to break the ice that may have formed on the aircraft, between the perimeter of the door (1) and the fuselage.

7. The aircraft electric door for a pressurized airframe as claimed in one of claims 5 or 6, in which a triggering means, internal or external to the aircraft, capable of triggering the unlocking of the safety catch, is chosen between a handle (4) associated with a sensor (C1) for detecting the end of travel of the handle (4) and a push-button (B4) triggering an electrical signal linked with the door computer (3).

8. The aircraft electric door for a pressurized airframe as claimed in one of claims 5 to 7, in which position sensors (C2, C3, C4) are fitted opposite the rotating parts (4, 43, 20) equipped with roller bearing Hall effect tracks and are linked with the door computer (3) in order to transmit position information about these parts.

9. The aircraft electric door for a pressurized airframe as claimed in one of claims 5 to 8, in which only the internal handle (4) is capable of directly actuating the unlocking of the safety catch in the event of an emergency opening.

10. The aircraft electric door for a pressurized airframe as claimed in claim 6, in which a multiplying lifting lever (40) is placed at each extremity of the safety catch shaft (43).

11. The aircraft electric door for a pressurized airframe as claimed in one of claims 5 to 10, in which the horizontal camway (9h) of the fixed cam (9) is chosen among a groove, a raised edge of a support and a horizontal track, in order to keep the door lifted and to prevent it from lowering.

12. The aircraft electric door for a pressurized airframe as claimed in one of claims 5 to 11, in which the system for mechanically locking the safety catch (43, 4a, 4b) comprises locks (41) mounted on a lock shaft (42) and associated with counter-locks (44) mounted on a safety catch shaft (43), the locking link between the locks and the counter-locks being released by the triggering means (4).

13. The aircraft electric door for a pressurized airframe as claimed in one of claims 5 to 12, in which the cylindrical support is a sleeve (50), rotationally mobile, comprising a camway (51) formed from a helical portion, globally slanting, linked with a guiding slider (63) coming from the door arm (6) and in which the sleeve is surrounded by a cylindrical cam support (9), forming the fixed guide having a double, vertical (9v) and horizontal (9h), camway linked with a same set of guiding sliders (63a, 63b).

14. The aircraft electric door for a pressurized airframe as claimed in one of claims 5 to 12, in which the mobile cylindrical support is a sleeve (501) rotated by the motor (2) via a vertical column (20), this sleeve comprising a camway (511) formed from a helical portion, globally slanting, linked with a guiding slider (631) coming from the door arm (6) and in which the fixed guide is constituted from a second sleeve coaxial with the first sleeve, forming the double, vertical and horizontal, camway linked with a second guiding slider (632) coming from the door arm via a hinge yoke (60) with the motor column (20) passing through it.

15. The aircraft electric door for a pressurized airframe as claimed in the preceding claim, in which the vertical column (20) is driven by a reducing gear (21) associated with the electric motor (2).

16. The aircraft electric door for a pressurized airframe as claimed in one of claims 5 to 12, in which the cylindrical support is a rod (23) forming a screw rod (502), rotated by a back-geared motor (210) via a nut (633) mounted on the rod (502), this threaded rod (502) forming a helical guideway (512), in which the fixed guide is constituted from a guideway sleeve (92) coaxial with the rod (23) and a hinge plate (331 b) coming from a fuselage fitting (330s), this sleeve (92) forming a vertical camway (92v), linked with a guiding slider (634) coming from the rod (23), and the hinge plate (331 b) forming a horizontal camway (92h) linked with at least one other slider (635, 636) coming from the rod (23).

17. The aircraft electric door for a pressurized airframe as claimed in the preceding claim, in which the threaded rod is a rod with balls (502) and the nut is a nut with balls (633).
